# EUROPEAN PATENT APPLICATION

(11) **EP 3 192 670 A1**
(43) Date of publication of application: **19.07.2017**
(21) Application number: 15840889.8
(22) Date of filing: 21.08.2015
(51) Int. Cl.: B60C 5/01, B60C 5/00

(54) **PNEUMATIC TIRE AND ASSEMBLY THEREOF**

(30) Priority: 12.09.2014 JP 2014187021
(71) Applicant: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2015/073589
(87) International publication number: WO 2016/039120

(57) **Abstract**

A pneumatic tire (10) and pneumatic tire assembly (10A) are configured by a resin tire frame member (20). A sound-absorbing material (42) is provided to an inner face of the tire frame member (20). The sound-absorbing material (42) is capable of absorbing sound. The sound-absorbing material (42) is thermally welded to the inner face of the tire frame member (20).

## Description

### Technical Field

The present invention relates to a pneumatic tire and an assembly thereof.

### Background Art

Patent Document 1 below describes a resin pneumatic tire in which a tire frame member is formed from a resin material, and a rubber tread is provided at an outer circumferential surface of the tire frame member.

Patent Document 1: Japanese Patent Application Laid-Open (JP-A) No. H03-143701

### SUMMARY OF INVENTION

### Technical Problem

The resin pneumatic tire described above attempts to reduce cavity resonance noise by suppressing vibration of internal air caused by unevenness of a road surface during vehicle travel.

In consideration of the above circumstances, an object of the present invention is to obtain a resin pneumatic tire capable of reducing cavity resonance noise.

### Solution to Problem

A pneumatic tire according to a first aspect of the present invention includes a tire frame member that is made from a resin, and a sound-absorbing material that is thermally welded to an inner face of the tire frame member and that is capable of absorbing sound.

In the pneumatic tire according to the first aspect, the tire frame member is made from a resin. The sound-absorbing material is provided to the inner face of the tire frame member, and the sound-absorbing material is capable of absorbing sound.

The sound-absorbing material is thermally welded to the inner face of the tire frame member. Accordingly, the sound-absorbing material can be easily attached and fixed to an inner circumferential surface of the tire frame member, and cavity resonance noise can be reduced by the sound-absorbing material.

A pneumatic tire according to a second aspect of the present invention is the pneumatic tire according to the first aspect, wherein the sound-absorbing material includes a blended resin material.

In the pneumatic tire according to the second aspect, the tire frame member is made from a resin, and the sound-absorbing material includes a blended resin material. Accordingly, matching conditions can be employed for thermal welding between the tire frame member and the sound-absorbing material, enabling easy fixing of the sound-absorbing material to the inner circumferential surface of the tire frame member by thermal welding.

A pneumatic tire according to a third aspect of the present invention is the pneumatic tire according to the second aspect, wherein the tire frame member is formed of a thermoplastic resin material, and the resin material blended into the sound-absorbing material is formed of a thermoplastic resin material.

In the pneumatic tire according to the third aspect, the resin material of the tire frame member and the resin material blended into the sound-absorbing material are equivalent thermoplastic resin materials. Thus, conditions for thermal welding between for the tire frame member and the sound-absorbing material can be matched in practice, enabling easy fixing of the sound-absorbing material to the inner circumferential surface of the tire frame member by thermal welding.

A pneumatic tire according to a fourth aspect of the present invention is the pneumatic tire according to any one of the first aspect to the third aspect, wherein the sound-absorbing material is configured by a spongiform porous structure containing bubbles, and a bubble density of a thermal weld layer formed by thermally welding the tire frame member and the sound-absorbing material together is lower than a bubble density of the sound-absorbing material.

In the pneumatic tire according to the fourth aspect, the sound-absorbing material is configured by a spongiform porous structure containing bubbles. The thermal weld layer is formed by thermally welding together the tire frame member and the sound-absorbing material. Note that since the bubble density of the thermal weld layer is lower than the bubble density of the sound-absorbing material, the adhesion surface area between the tire frame member and the sound-absorbing material can be increased. Accordingly, the adhesion force between the inner face of the tire frame member and the sound-absorbing material can be improved.

A pneumatic tire according to a fifth aspect of the present invention includes the pneumatic tire according to any one of the first aspect to the fourth aspect, and a wheel onto which the pneumatic tire is assembled.

The pneumatic tire assembly according to the fifth aspect can obtain equivalent operation to the operation of the pneumatic tire according to any one of the first aspect to the fourth aspect.

### Advantageous Effects of Invention

The present invention has the excellent advantageous effect that a resin pneumatic tire and assembly thereof capable of reducing cavity resonance noise can be obtained.

### BRIEF DESCRIPTION OF DRAWINGS

Fig. 1 is a cross-section as viewed along a radial direction, illustrating overall configuration of a pneumatic tire and a pneumatic tire assembly according to an exemplary embodiment of the present invention.
Fig. 2 is an enlarged perspective view illustrating an upper side cross-section portion of the pneumatic tire illustrated in Fig. 1.
Fig. 3 is an exploded perspective view of the pneumatic tire illustrated in Fig. 2.
Fig. 4A is an enlarged cross-section illustrating relevant portions of a tire frame member and a sound-absorbing material of the pneumatic tire illustrated in Fig. 1 to Fig. 3 prior to thermal welding.
Fig. 4B is an enlarged cross-section corresponding to Fig. 4A and illustrating relevant portions after thermal welding of a tire frame member and a sound-absorbing material.

### DESCRIPTION OF EMBODIMENTS

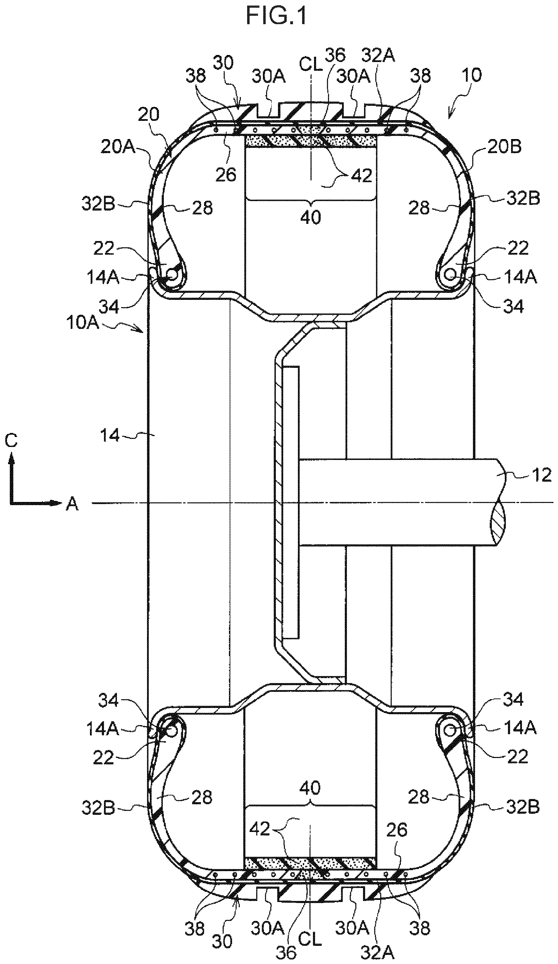

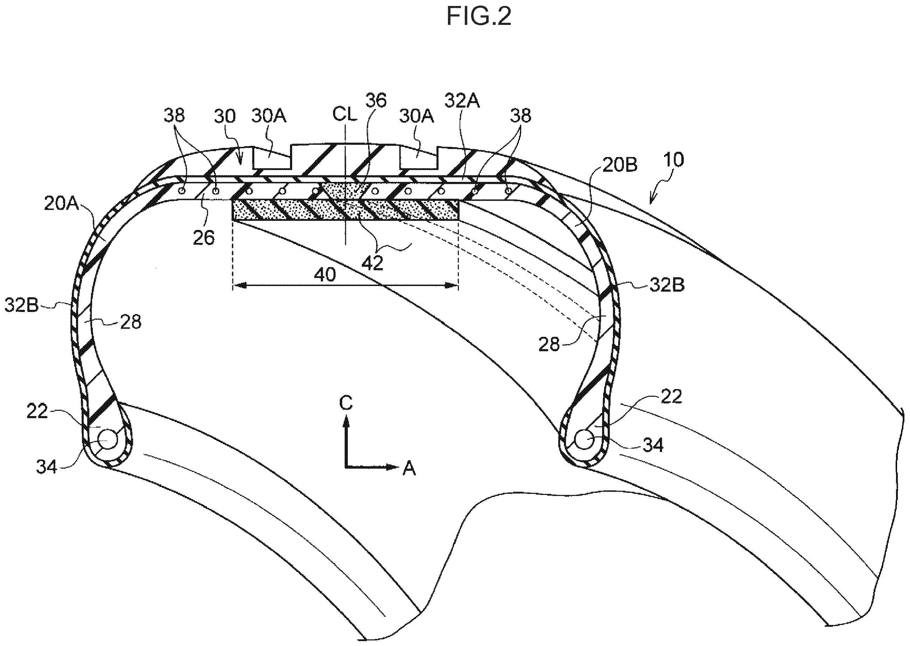

Explanation follows regarding a pneumatic tire and assembly thereof according to an exemplary embodiment of the present invention, with reference to Fig. 1 to Fig. 4. Note that in the drawings, the letter A indicates a tire axial direction as appropriate. The tire axial direction A corresponds to a vehicle width direction of a vehicle fitted with the pneumatic tire. The letter C indicates a tire radial direction.

As illustrated in Fig. 1, a pneumatic tire 10 according to the present exemplary embodiment is assembled to rims 14A of a wheel 14 attached to an end portion of an axle 12 of a vehicle, not illustrated in the drawings. A pneumatic tire assembly 10A according to the present exemplary embodiment includes the wheel 14 and the pneumatic tire 10 assembled to the wheel 14. The pneumatic tire 10 includes a resin tire frame member 20 having a toroidal shape spanning between one bead portion 22 on the vehicle width direction outside of the pneumatic tire 10, and another bead portion 22 on the vehicle width direction inside of the pneumatic tire 10. A tread layer 30 is provided at an outer circumferential surface of the tire frame member 20. Side covering layers 32B are provided at outside faces of the tire frame member 20. Moreover, in the pneumatic tire 10, a sound-absorbing material 42 capable of absorbing sound is attached and fixed by thermal welding to a weld region 40 of an inner circumferential surface of the tire frame member 20.

### Tire Frame Member Configuration

As illustrated in Fig. 1 to Fig. 3, the tire frame member 20 of the present exemplary embodiment is molded by injection molding a resin material. More specifically, the structure of tire frame member 20 includes a crown portion 26, side wall portions 28, and the bead portions 22. The crown portion 26 is provided at the outer circumferential surface of the tire frame member 20. The side wall portions 28 respectively extend from both tire axial direction edges of the crown portion 26 toward the tire radial direction inside, and are formed integrally to the crown portion 26. The bead portions 22 are respectively provided at the tire radial direction inside of the respective side wall portions 28, and are formed integrally to the respective side wall portions 28.

A bead core 34 is embedded in each of the bead portions 22. The bead cores 34 may employ metal bead cores, organic fiber bead cores, resin bead cores in which an organic fiber material is covered by a resin material, hard resin bead cores, or the like. Note that the bead cores 34 may be omitted in cases in which the rigidity of the bead portions 22 is secured and the bead portions 22 are fitted to the rims 14A of the wheel 14 in an appropriate manner (see Fig. 1).

Resin materials such as a thermoplastic resin having rubber-like elasticity, a thermoplastic elastomer (TPE), or a thermosetting resin may be employed as resin materials. A thermoplastic elastomer is well-suited as the resin material in consideration of its elasticity during travel and its molding properties during manufacture.

Thermoplastic amide-based elastomers (TPA), thermoplastic ester-based elastomers (TPC), thermoplastic olefin-based elastomers (TPO), thermoplastic styrene-based elastomers (TPS), thermoplastic urethane-based elastomers (TPU), thermoplastic cross-linked rubbers (TPV), or other thermoplastic elastomers (TPZ), and the like, as defined in JIS K6418 (Japan Industrial Standards), may be employed as thermoplastic elastomers.

Moreover, in cases in which a thermoplastic resin is employed as the resin material, urethane resins, olefin resins, vinyl chloride resins, polyamide resins and the like may be employed as the thermoplastic resin. More specifically, a thermoplastic resin having the characteristics of a deflection temperature under load (when loaded at 0.45 MPa) as defined by ISO (International Organization for Standardization) 75-2 or ASTM (American Association for Testing Materials) D648 of 78°C or greater, a tensile yield strength, tensile yield elongation, and tensile elongation at break, as defined by JIS K7113, of 10 MPa or greater, 10% or greater, and 50% or greater respectively, and with a Vicat softening temperature, as defined by JIS K7206 (method A), of 130°C or greater, is well-suited for use.

In the present exemplary embodiment, the tire frame member 20 includes half-frame members 20A, 20B molded as left-right halves symmetrical about a tire width direction central portion, namely about a tire equatorial plane CL or a plane in the vicinity thereof, of the pneumatic tire 10. Tire width direction center side edges of the crown portions 26 of the respective half-frame members 20A, 20B are bonded together to configure the tire frame member 20. A bonding material 36 is employed in bonding. A welding method in which a resin material of the same type or a different type to that of the tire frame member 20 is employed as the bonding material 36 may be employed when bonding. Moreover, a hot-plate welding method in which a hot plate is inserted between edges of the crown portion 26, and the hot plate is removed whilst pressing the edges in directions toward each other to bond together the edges that are in a molten state, may also be employed when bonding. In such cases, resin material that has melted and then hardened configures the bonding material 36. Moreover, an adhesive may be employed for some of the bonding material 36 in combination with the welding method or the hot-plate welding method described above.

A reinforcing cord 38 is provided wound around the crown portion 26 in a spiral shape, for example. A steel cord, a monofilament (single strand) formed from a metal fiber or an organic fiber, or a multifilament (twisted strands) configured by twisting such fibers together, may be employed as the cord 38. When a steel cord is employed, sheet shaped thermoplastic resin material is adhered to a tire radial direction outside of the crown portion 26, and the steel cord is embedded in the thermoplastic resin material while being heated. Note that the thermoplastic resin material may be heated as well as heating the steel cord.

Providing the cord 38 to the crown portion 26 enables the tire circumferential direction rigidity of the crown portion 26 to be improved, and also enables the fracture resistance of the crown portion 26 to be improved. This also enables the puncture resistance of the crown portion 26 of the pneumatic tire 10 to be raised. Note that the cord 38 may be provided intermittently in the tire width direction. Moreover, further reinforcing material may be provided to at least one location out of the bead portions 22, the crown portion 26, and the side wall portions 28 of the tire frame member 20 in order to reinforce the tire frame member 20. Practically, a polymer material, a metal fiber material, a cord material, a nonwoven fabric material, a woven fabric material, or the like may be employed as a reinforcing material.

### Tread Layer Configuration

The tread layer 30 is provided at an outer circumferential surface of the tire frame member 20, with cushioning rubber 32A interposed therebetween. In the present exemplary embodiment, rubber similar to that employed in the tread rubber of general rubber pneumatic tires, or similar to the tread rubber employed in recycled tires, is employed for the tread layer 30. Moreover, the cushioning rubber 32A may employ cushioning rubber similar to cushioning rubber in precured (cold) recycled tires adhered with vulcanized rubber molded with a tread face in advance. Note that the tread face of the tread layer 30 is formed with water-repelling grooves 30A, similarly to a general rubber pneumatic tire. Moreover, the tread pattern of the tread layer 30 is not particularly limited, and a known tread pattern may be employed.

### Side Covering Layer Configuration

The side covering layers 32B are formed from rubber similar to rubber employed in the side wall portions and bead portions of general rubber pneumatic tires. In the present exemplary embodiment, the respective side covering layers 32B are formed continuously from both tire width direction edges of the tread layer 30 along outer faces of the side wall portions 28, outer faces of the bead portions 22, and inner faces of the bead portions 22.

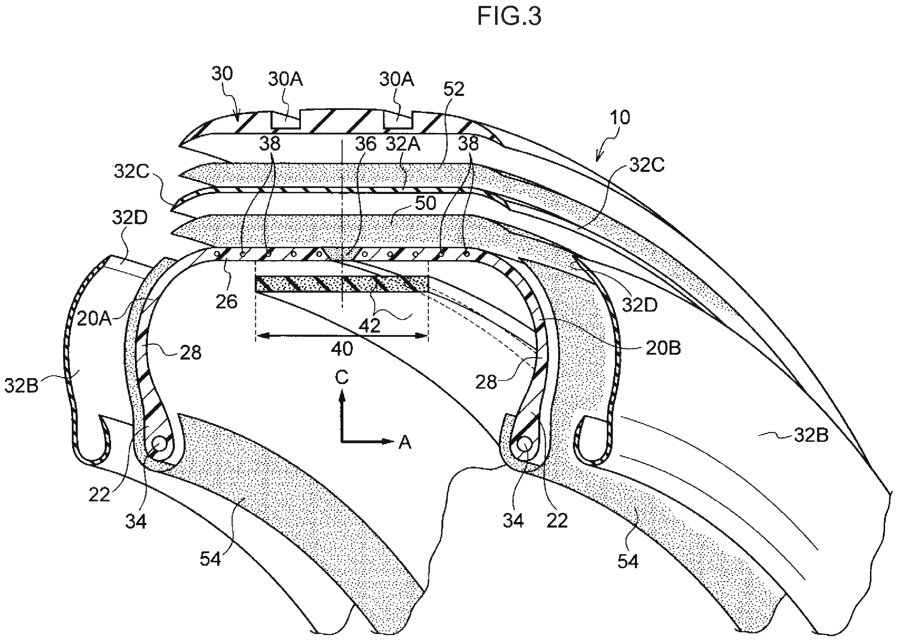

The thickness of the side covering layers 32B is set to substantially the same thickness as that of the cushioning rubber 32A. Moreover, as illustrated in Fig. 3, an edge on the cushioning rubber 32A side of each side covering layer 32B is provided with a tapering-shaped bonding portion 32D, and edges of the cushioning rubber 32A on the side covering layer 32B sides are provided with tapering-shaped bonding portions 32C. The tapering shape increases the bonding surface area over which the bonding portion 32C and the bonding portion 32D are bonded together.

In the pneumatic tire 10 of the present exemplary embodiment, the entire outer face of the tire frame member 20 is completely covered by the cushioning rubber 32A and the side covering layers 32B, namely is completely covered by vulcanized rubber.

### Configuration of Sound-Absorbing Material

As illustrated in Fig. 1 to Fig. 3, the weld region 40 is provided to the inner circumferential surface of the tire frame member 20. In the present exemplary embodiment, the weld region 40 configures a tire axial direction central portion of the crown portion 26 around an entire circumferential direction inner face thereof, and is a location where the surface of the resin material of the tire frame member 20 is exposed. The weld region 40 may configure the entire tire radial direction region from an inner face of the crown portion 26 to inner faces of the respective bead portions 22, or may configure the inner faces of the side wall portions 28 and/or inner faces of the bead portions 22 and exclude the inner face of the crown portion 26. Further, the weld region 40 may be provided separated at uniform spacings in the circumferential direction. In other words, as long as the weld region 40 is a location where the inner face of the tire frame member 20 is directly exposed, there are no particular limitations to the location of the weld region 40.

The sound-absorbing material 42 is configured in a belt shape or a tube shape, having a uniform width in the tire axial direction, and with its length direction extending along the inner circumferential surface of the tire frame member 20. The sound-absorbing material 42 is provided to the weld region 40 by thermal welding. The sound-absorbing material 42 has a spongiform porous structure, and at least includes a blended resin material. What is referred to as a spongey material, obtained by foaming the resin material, is employed as the sound-absorbing material 42. More specifically, a resin material such as a thermoplastic resin, a thermoplastic elastomer (TPE), or a thermosetting resin may be employed as the resin material. Further, it is preferable to employ a resin material that is the same as or equivalent to the resin material of the tire frame member 20 as the resin material. In the present exemplary embodiment, the spongey material of the sound-absorbing material 42 may employ a closed-cell foam (independent cell foam) type or an open-cell foam type. Moreover, the spongey material may be integrally formed with at least one of an animal fiber, a plant fiber, or a synthetic fiber entangled with the above material. The sound-absorbing material 42 employed in the present exemplary embodiment effectively converts sound energy into heat energy, thereby damping sound. Moreover, the sound-absorbing material 42 has excellent vibration damping properties. Note that the thickness of the sound-absorbing material 42 is set to be from 10 mm to 10 cm. Note that in the present exemplary embodiment, the sound-absorbing material 42 may include a material having excellent sound reflectivity, such as a glass wool material, a felt material, or a foamed rubber material.

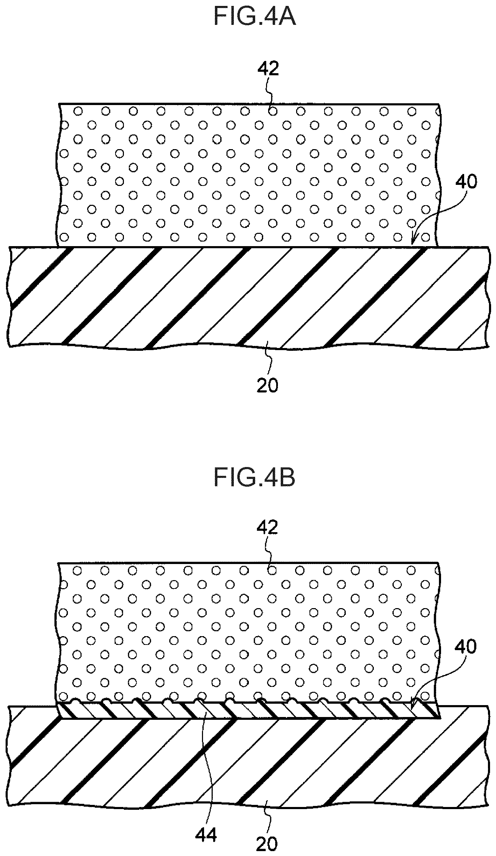

Note that a state in which the sound-absorbing material 42 is provided to the weld region 40 of the tire frame member 20 prior to thermal welding is illustrated in Fig. 4A. Moreover, a state in which the sound-absorbing material 42 has been welded by thermal welding to the weld region 40 is illustrated in Fig. 4B. As illustrated in Fig. 4B, a thermal weld layer 44 is formed between the tire frame member 20 and the sound-absorbing material 42 where part of the thickness direction of the inner circumferential surface of the tire frame member 20, and part of the thickness direction of the sound-absorbing material 42 have melted and hardened together in thermal welding. To explain in detail, a thermoplastic elastomer is employed as the tire frame member 20. In cases in which a thermoplastic elastomer is employed as the resin material blended into the sound-absorbing material 42, thermal welding is performed by heating the weld region 40 for a period of from 5 seconds to 3 minutes at a temperature of from 90°C to 160°C. Under such conditions, a thermal weld layer 44 with a thickness of 0.01 mm to 10 mm can be formed. Of course, the main component of the thermal weld layer 44 is a thermoplastic elastomer.

The sound-absorbing material 42 illustrated in Fig. 4A and Fig. 4B is a closed-cell type foam, however part of the sound-absorbing material 42 on the weld region 40 side is melted and formed into the weld layer 44, so the bubble density of the thermal weld layer 44 is lower than the bubble density of the sound-absorbing material 42. Similarly, in cases in which the sound-absorbing material 42 is an open-cell type foam, the bubble density of the thermal weld layer 44 is lower than the bubble density of the sound-absorbing material 42.

In the pneumatic tire 10 according to the present exemplary embodiment, a release agent (inner face liquid layer) of silicone or the like that is employed during vulcanization is not applied to the weld region 40. This is since the tire frame member 20 is made from a resin, and a bladder employed during vulcanization is generally made from butyl rubber, such that the bladder is not liable to stick to the inner circumferential surface of the tire frame member 20, rendering a release agent unnecessary. Moreover, a release agent is not necessary when the tread rubber side of the tire frame member is covered with an envelope to configure a temporary assembly and then vulcanized. A release agent is thus not necessary at the inner circumferential surface of the tire frame member 20. Accordingly, in the pneumatic tire 10, a release agent is not applied, enabling the sound-absorbing material 42 to be directly fixed to the weld region 40 by thermal welding, without requiring a process to remove release agent.

### Pneumatic Tire Manufacturing Method

Simple explanation follows regarding a manufacturing method of the pneumatic tire 10 according to the present exemplary embodiment, with reference to Fig. 1 to Fig. 4.

First, the resin tire frame member 20 illustrated in Fig. 3, the tread layer 30 in a vulcanized or semi-vulcanized state, and the side covering layers 32B in a vulcanized or semi-vulcanized state are molded in advance. Note that the side covering layers 32B are molded in shapes corresponding to affixing locations on the tire frame member 20.

The unvulcanized rubber cushioning rubber 32A is disposed at the outer circumferential surface of the tire frame member 20, and the tread layer 30 is disposed at the tire radial direction outside of the cushioning rubber 32A. The tread layer 30 is belt shaped, and the tread layer 30 is wrapped onto the outer circumference of the cushioning rubber 32A in an annular shape. Alternatively, the tread layer 30 may be formed in an annular shape in advance, and the tread layer 30 may be fitted onto the outer circumference of the cushioning rubber 32A. A tread pattern is provided on a front face of the tread layer 30.

Note that as illustrated in Fig. 3, the cushioning rubber 32A is adhered to the outer circumferential surface of the tire frame member 20 through an adhesive 50, and similarly, the tread layer 30 is adhered to the outer circumference of the cushioning rubber 32A through an adhesive 52. In the present exemplary embodiment, a triazine thiol-based adhesive is employed for the adhesives 50, 52. These adhesives are coated under an atmosphere of 70% humidity or lower. Alternatively, a chlorinated rubber-based adhesive, a phenol resin-based adhesive, an isocyanate-based adhesive, a halogenated rubber-based adhesive, or the like may be employed for the adhesives 50, 52.

The outer circumferential surface of the tire frame member 20 is buffed prior to coating with the adhesive 50, and similarly, the front face of the cushioning rubber 32A is buffed prior to coating with the adhesive 52. The buffing is processing to at least partially remove an outermost surface using sandpaper, a grinder, or the like. Buffing increases the adhesion force of the adhesive 50 to the outer circumferential surface of the tire frame member 20, and increases the adhesion force of the adhesive 52 to the front face of the cushioning rubber 32A. Moreover, after buffing, the outer circumferential surface of the tire frame member 20 and the front face of the cushioning rubber 32A are preferably respectively de-greased by washing with an alcohol solution or the like. Moreover, after buffing, the outer circumferential surface of the tire frame member 20 and the front face of the cushioning rubber 32A are preferably respectively subjected to surface modification such as corona discharge treatment or ultraviolet irradiation treatment. Such treatment enables the adhesion force to be increased.

A tacky material such as a rubber cement composition is preferably coated onto a back face of the tread layer 30 and/or the front face of the cushioning rubber 32A in advance. The tacky material can be used in a temporary fixing operation, enabling the task to be made easier. In cases in which styrene-butadiene rubber (SBR) is employed for the tread layer 30, an SBR-based splice cement is employed as the rubber cement composition. In cases in which an SBR-based rubber with a high natural rubber (NR) content is employed for the tread layer 30, an SBR-based splice cement containing butadiene rubber (BR) is employed as the rubber cement composition. Moreover, a solvent-free cement containing an elastomer in liquid form such as liquid BR or the like, a cement with a main component of a blend of isoprene rubber (IR) rubber and SBR, or the like may be employed as the rubber cement composition.

Next, as illustrated in Fig. 3, the side covering layers 32B are disposed at outside faces of the tire frame member 20 (outer faces of the side wall portions 28 and the bead portions 22). The side covering layers 32B are adhered to the outside face of the tire frame member 20 through an adhesive 54 (or a rubber cement composition). Prior to coating with the adhesive 54, the outside face of the tire frame member 20 or back faces of the side covering layers 32B are subjected to buffing or the like, similarly to as described above. Note that symbols, text, numbers, and the like indicating the name of the maker, product name, tire size, and the like are provided on an outer face of the side covering layers 32B.

The entire outer face of the tire frame member 20 on which the tread layer 30 and the side covering layers 32B are disposed is covered by an envelope, not illustrated in the drawings, and the tire frame member 20 is assembled to a pair of annular support members with a structure similar to that of a rim. Tire radial direction inside edges of the envelope are sandwiched between the bead portions 22 and flanges of the support members. Moreover, the grooves 30A of the tread layer 30 are temporarily filled in with a pressed-on material formed from an elastic body of rubber or the like. The pressed-on material is removed after vulcanization. The envelope is a covering member made from rubber, and is airtight and elasticated, as well as being thermally and chemically stable, and has appropriate strength. In the present exemplary embodiment, butyl rubber is employed for the envelope. The envelope is provided with a valve, not illustrated in the drawings, and the valve is configured connected to a vacuum device, not illustrated in the drawings. The vacuum device creates a vacuum inside the envelope, such that the envelope creates a force pressing the tread layer 30 and the side covering layers 32B toward the tire frame member 20 side.

Next, the temporary assembly is transported into a vulcanizing apparatus, not illustrated in the drawings. The temporary assembly is applied with heat and pressure inside the vulcanizing apparatus, thereby vulcanizing the temporary assembly. The temporary assembly configures a substantially completed pneumatic tire 10 when vulcanized. Following vulcanization, the envelope and the support members are removed.

Next, in the pneumatic tire 10, at least the weld region 40 of the inner circumferential surface of the tire frame member 20 is heated, and, as illustrated in Fig. 4A, the sound-absorbing material 42 is disposed on the heated weld region 40. Thus, as illustrated in Fig. 4B, both part of the weld region 40 of the tire frame member 20, and part of the sound-absorbing material 42 are melted and hardened together to form the weld layer 44, and the sound-absorbing material 42 is thermally welded to the weld region 40. Note that in the present exemplary embodiment, a method is used in which the weld region 40 side is heated, however the sound-absorbing material 42 may be heated as well. In cases in which both the weld region 40 and the sound-absorbing material 42 are heated, the welding time can be shortened. Further, in the present exemplary embodiment, prior to welding, at least any one out of buffing, degreasing, corona discharge treatment, ultraviolet irradiation treatment, or the like, mentioned above may be performed on at least the weld region 40.

When the above processing sequence has been completed, the pneumatic tire 10 according to the present exemplary embodiment illustrated in Fig. 1 to Fig. 3 is complete.

### Operation and Advantageous Effects of the Present Exemplary Embodiment

As illustrated in Fig. 1 to Fig. 3, in the pneumatic tire 10 according to the present exemplary embodiment, the tire frame member 20 is made from a resin. The sound-absorbing material 42 is provided to the inner circumferential surface of the tire frame member 20, more specifically to the weld region 40. The sound-absorbing material 42 is capable of absorbing sound.

Note that the sound-absorbing material 42 is thermally welded to the inner circumferential surface of the tire frame member 20. Accordingly, the sound-absorbing material 42 can be easily attached and fixed to the inner circumferential surface of the tire frame member 20, enabling a reduction in cavity resonance noise by the sound-absorbing material 42.

In the pneumatic tire 10 according to the present exemplary embodiment, the tire frame member 20 is made from a resin, and the sound-absorbing material 42 includes a blended resin material. Accordingly, matching conditions can be employed for thermal welding between the tire frame member 20 and the sound-absorbing material 42, enabling easy fixing of the sound-absorbing material 42 to the inner circumferential surface of the tire frame member 20 by thermal welding.

Further, in the pneumatic tire 10 of the present exemplary embodiment, the resin material of the tire frame member 20, and the resin material blended into the sound-absorbing material 42, are equivalent thermoplastic resin materials. Thus, conditions for thermal welding between the tire frame member 20 and the sound-absorbing material 42 can be matched in practice, enabling easy fixing of the sound-absorbing material 42 to the inner circumferential surface of the tire frame member 20 by thermal welding.

In the pneumatic tire 10 of the present exemplary embodiment, the sound-absorbing material 42 is configured by a spongiform porous structure containing bubbles. As illustrated in Fig. 4B, the thermal weld layer 44 is formed by thermally welding together the tire frame member 20 and the sound-absorbing material 42. Note that the bubble density of the thermal weld layer 44 is lower than the bubble density of the sound-absorbing material 42, enabling the adhesion surface area between the tire frame member 20 and the sound-absorbing material 42 to be increased. Accordingly, the adhesion force between the inner circumferential surface of the tire frame member 20 and the sound-absorbing material 42 can be improved.

Further, the pneumatic tire assembly 10A according to the present exemplary embodiment illustrated in Fig. 1 is capable of obtaining similar operation and advantageous effects to the operation and advantageous effects obtained by the pneumatic tire 10 described above.

### Other Exemplary Embodiments

The present invention has been explained based on the above described exemplary embodiment. However, the present invention is not limited to the above described exemplary embodiment, and various modifications may be implemented within a range not departing from the spirit of the present invention.

### Explanation of Reference Numerals

- 10: pneumatic tire
- 20: tire frame member
- 22: bead portion
- 26: crown portion
- 28: side wall portion
- 30: tread layer
- 32A: cushioning rubber
- 32B: side covering layer
- 40: weld region
- 42: sound-absorbing material
- 44: thermal weld layer

## Claims

1. A pneumatic tire comprising:
a tire frame member that is made from a resin; and
a sound-absorbing material that is thermally welded to an inner face of the tire frame member and that is capable of absorbing sound.

2. The pneumatic tire of claim 1, wherein the sound-absorbing material comprises a blended resin material.

3. The pneumatic tire of claim 2, wherein:
the tire frame member is formed of a thermoplastic resin material; and
the resin material blended into the sound-absorbing material is formed of a thermoplastic resin material.

4. The pneumatic tire of any one of claim 1 to claim 3, wherein:
the sound-absorbing material is configured by a spongiform porous structure containing bubbles; and
a bubble density of a thermal weld layer formed by thermally welding the tire frame member and the sound-absorbing material together is lower than a bubble density of the sound-absorbing material.

5. A pneumatic tire assembly comprising:
the pneumatic tire of any one of claim 1 to claim 4; and
a wheel onto which the pneumatic tire is assembled.
